## Europäisches Patentamt
## European Patent Office
## Office européen des brevets

(11) Publication number: **0 064 343**
**A1**

(12) # EUROPEAN PATENT APPLICATION

(21) Application number: **82301953.4**

(22) Date of filing: **16.04.82**

(51) Int. Cl.³: **C 08 F 12/08**
**C 08 F 2/44**

(30) Priority: **30.04.81 US 259302**

(43) Date of publication of application:
**10.11.82 Bulletin 82/45**

(84) Designated Contracting States:
**BE DE FR GB IT NL**

(71) Applicant: **MOBIL OIL CORPORATION**
**150 East 42nd Street**
**New York New York 10017(US)**

(72) Inventor: **Marien, Bruce Arthur**
**22 Wickham Lane**
**East Windsor New Jersey(US)**

(74) Representative: **Cooper, John Anthony et al,**
**Mobil Court 3 Clements Inn**
**London WC2A 2EB(GB)**

(54) Thermally stable crystal polymers of styrenic monomers.

(57) There is provided a thermally stable crystal polymer of a styrenic monomer which is polymerized in the presence of a hindered phenolic antioxidant.

EP 0 064 343 A1

## THERMALLY STABLE CRYSTAL POLYMERS OF STYRENIC MONOMERS

This invention relates to thermally stable crystal polymers of styrenic monomers, such as crystal polystyrene, which are polymerized in the presence of a hindered phenolic antioxidant.

This invention provides a method for preparing a thermally stabilized crystal polymer of a styrenic monomer, the method comprising the steps of (i) mixing a stabilizing amount of hindered phenolic antioxidant with the styrenic monomer; and (ii) polymerizing the styrenic monomer of step (i).

Thermally stable polystyrene is particularly advantageous in such applications as foam extrusion and injection molding. The economic factors affecting these applications dictate the need to recycle scrap and trim. Recycling is typically harsh on polystyrene's physical properties. The polymer is subjected to several heat and mechanical histories during each cycle which degrade it and lower the value of the material as a plastic. Recycled material is mixed with new resin in proportions necessary to form an acceptable article, i.e., new resin is used to upgrade the recycled resin to minimal standards. Therefore, the longer a material can be recycled, the smaller amount of new material is needed. Furthermore, the more stable to degradation a material is, the longer it can be recycled.

U.S. Patent No. 4,136,142 describes a stabilized crystal polystyrene composition having a hindered phenol and a tris (substituted phenyl) phosphite. However, the hindered phenol and phosphite are compounded into pre-polymerized polystyrene by an extruder operating at temperatures of at least 204°C (400°F). This compounding step is not only costly, particularly in terms of energy consumed, but it may also have a degradative effect on the polystyrene.

Accordingly, there is a need in the art for improved methods of stabilizing crystal polystyrene.

The term "styrenic monomers" as used herein is intended to connote aryl vinyl monomers such as styrene, ring-substituted alkyl styrenes and ring-halo-substituted styrenes. Particular styrenic monomers include styrene, paramethylstyrene, metamethylstyrene, para-t-butylstyrene and parachlorostyrene, a preferred styrenic monomer being styrene. The expression "crystal polymers of styrenic monomers" as used herein is intended to connote homopolymers of styrenic monomers.

The hindered phenolic antioxidant may comprise one or more compounds. Examples of such hindered phenolic antioxidant compounds include: n-octadecyl 3,5-di-tert-butyl-4-hydroxyhydrocinnamate (IRGANOX 1076, a tradename of Ciba-Geigy); neopentanetetrayl tetrakis (3,5-di-tert-butyl)-4-hydroxyhydrocinnamate; 2,6-di-tert-butyl-para-cresol (butylated hydroxytoluene or BHT); 1,3,5-tris (4-tert-butyl-3-hydroxy-2,6-dimethylbenzyl) 1,3,5-triazine; 1,1,3-tris (2-methyl-4-hydroxy-5-tert-butylphenyl) butane; and 1,3,5-trimethyl-2,4,6-tris [3,5-di-tert-butyl-4-hydroxybenzyl] benzene. A preferred antioxidant is 1,3,5-trimethyl-2,4,6-tris [3,5-di-tert-butyl-4-hydroxybenzyl] benzene. Certain hindered phenolic antioxidants are discussed in the Kirk-Othmer Encyclopedia of Chemical Technology, Third Edition, Volume 3 (1978), pages 128-148. Note particularly, compounds 13-16 referred to on pages 129-133 of the above-mentioned passage of Kirk-Othmer.

The amount of hindered phenolic antioxidant may be, e.g., 100-1000 ppm, preferably about 500 ppm, relative to the amount of styrenic monomer present.

While not wishing to be limited to any particular theory or mechanism, the polymerization of styrenic monomer in the presence of hindered phenolic antioxidants is felt to significantly increase the recycleability of the resulting styrenic polymer by terminating degradative radicals during processing.

The styrenic monomer of the above-mentioned step (i) may also contain one or more other additives such as external lubricants, internal lubricants and an aryl phosphite additive. The term "external lubricant" as used herein is intended to connote a lubricant which tends to reduce friction on the external surface of the polymeric mass when contacted with various surfaces. For example, an external lubricant may reduce friction generated from the contact of the external surface of a polymeric mass with the internal, metal surface of a reactor. For this reason, "external lubricants" may sometimes also be termed "metal lubricants." The term "internal lubricant" as used herein is intended to connote a lubricant which tends to reduce the friction generated in the interior of the polymeric mass when individual polymeric chains slide along one another. External lubricants may be particularly useful in foam grades of polymers, whereas internal lubricants may be particularly useful in injection molding grades of polymers.

Examples of external lubricants include stearic acid, zinc stearate, calcium stearate, magnesium stearate, ethytlene-bis-stearamide and polyethylene/polypropylene oxides. A preferred external lubricant is zinc stearate. Examples of internal lubricants include various mineral oils, such as KAYDOL-350 (a tradename of Witco), PRIMOL-350 (a tradename of Exxon), and ARCO 400 (a tradename of Arco).

Examples of aryl phosphites are mentioned in U.S. Patent No. 4,136,142. A preferred aryl phosphite additive is tris nonylphenyl phosphite.

Zinc Stearate may be used in an amount of 250-2000 ppm relative to the amount of styrenic monomer, especially about 1000 ppm for a foam grade polymer. Tris nonylphenyl phosphite may be used in an amount of 500-1500 ppm relative to the amount of styrenic monomer, especially 500 ppm for a foam grade polymer.

While still not wishing to be limited to any particular theory or mechanism, the inclusion of zinc stearate in the styrene is felt to increase recycleability by reducing the effects of mechanical shear on the polymer during processing. The inclusion of aryl phosphites is felt to extend the ability of the hindered phenolic in terminating radicals. Furthermore, phosphites are felt to improve the aesthetic appearance of the recycle product by reducing the discoloration associated with the interaction of zinc and phenolic compounds.

Traditionally, fabricators would use the highest molecular weight (Mw) crystal polystyrene available for their specific application in order to accomodate the anticipated physical property loss due to recycling. The high Mw resin (for foam) is more expensive than general purpose grades since it must be produced at slower rates. The high Mw resin is also difficult to fabricate due to higher melt viscosities which increase power consumption.

A major advantage of this invention is the ability of a stabilized, lower Mw resin to replace the more expensive and energy intensive high Mw resin. This offers an advantage to both the resin producer (faster production rates) and the fabricator (lower energy consumption and increased recycled resin stability).

For example, a foam grade crystal polystyrene stabilized in accordance with the present invention may have a melt index of 2.2 to 2.6. By contrast, a high molecular weight, unstabilized foam grade crystal polystyrene having similar recyclability properties might have a melt index of 1.8 or less. More particularly, a relatively low molecular weight foam grade crystal polystyrene produced in accordance with the present invention having a melt index of about 2.2 would compare favorably, in terms of recyclability, with a relatively high molecular weight unstabilized foam grade polystyrene having a melt index of 1.5.

The stabilized styrenic polymer of the present invention may be produced by any suitable polymerization technique such as, e.g., thermally initiated techniques, free radical initiator initiated techniques, bulk polymerization techniques, solvent polymerization techniques and suspension polymerization techniques. Hindered phenolic antioxidants and other additives may be added to the polymerization system at the beginning or at subsequent stages of polymerization.

It is particularly noted that the styrenic monomer of the above-mentioned step (i) may contain other materials not specifically set forth herein, such as dissolved polystyrene.

## EXAMPLE·1

Styrene monomer was used to dissolve 500 ppm of 1,3,5-trimethyl-2,4,6-tris [3,5-di-tert-butyl-4-hydroxybenzyl] benzene (Ethyl 330 or AO-330, tradenames of Ethyl· Corp.). The solution was polymerized thermally and pelletized for testing. A Brabender

F-1004                                    -5-

Plasticorder (trademark) torque rheometer was used to demonstrate
the maintenance of melt viscosity during the recycle simulations.
The results (Table A) show that the stabilized resin retained its
polymeric properties longer than the unstabilized control sample.

TABLE A

BRABENDER MELT STABILITY TEST (200°C 60 rpm 20 minutes)

| Time (min) | Torque AO-330 | (k-m) Control | Melt Indexes* AO-330 | Control |
|---|---|---|---|---|
| 0 | - | - | 2.7 | 2.85 |
| 5 | 1.460 | 1.440 | - | - |
| 10 | 1.425 | 1.375 | - | - |
| 15 | 1.410 | 1.345 | - | - |
| 20 | 1.400 | 1.310 | 2.75 | 10.1 |

* Condition G

EXAMPLE 2

The effects of various additive combinations were
established by measuring the oxidative induction temperatures of
modified polystyrene resins via Differential Scanning Calorimetry
(DSC). Samples were prepared with 0.1% Ethyl 330 (a tradename of
Ethyl Corp.), 0.5% zinc stearate and/or 0.1% tris nonylphenyl
phosphite (TNPP).

OXIDATIVE INDUCTION TEMPERATURES (°C)

VIA DSC

| ADDITIVES | INDUCTION TEMPERATURE |
|---|---|
| Control (blank) | 224 |
| Ethyl 330 | 278 |
| Zinc Stearate (ZnSt) | 244 |
| ETHYL 330/ZnSt | 264 |
| ETHYL 330/ZnSt/TNPP | 266 |

WHAT IS CLAIMED IS:

1.  A method for preparing a thermally stabilized crystal polymer of a styrenic monomer, the method comprising the steps of:

(i)  mixing a stabilizing amount of hindered phenolic antioxidant with the styrenic monomer; and

(ii)  polymerizing the styrenic monomer of step (i).

2.  A method according to claim 1 or 2, wherein the styrenic monomer is selected from the group consisting of styrene, paramethylstyrene, metamethylstyrene, para-t-butylstyrene and parachlorostyrene.

3.  A method according to claim 1, wherein the hindered phenolic antioxidant is selected from the group consisting of n-octadecyl 3,5-di-tert-butyl-4-hydroxyhydrocinnamate; neopentanetetrayl tetrakis (3,5-di-tert-butyl)-4-hydroxyhydrocinnamate; 2,6-di-tert-butyl-para-cresol; 1,3,5-tris (4-tert-butyl-3-hydroxy-2,6-dimethylbenzyl) 1,3,5-triazine; 1,1,3-tris (2-methyl-4-hydroxy-5-tert-butylphenyl) butane; and 1,3,5-trimethyl-2,4,6-tris [3,5-di-tert-butyl-4-hydroxybenzyl] benzene.

4.  A method according to any one of claims 1 to 3, wherein the styrenic monomer of step (i) further comprises an external lubricant and an aryl phosphite.

5.  A method according to any one of claims 1 to 4 wherein the styrenic monomer of step (i) comprises 100-1000 ppm of the hindered phenolic antioxidant.

6.  A method according to any one of claims 1 to 5, whereby the stabilized polystyrene is a foam grade polystyrene having a melt index of 2.2 to 2.6.

7.  A method according to claim 6, wherein the styrene of step (i) comprises:

(a)  500 ppm of 1,3,5-trimethyl-2,4,6-tris [3,5-di-tert-butyl-4-hydroxybenzyl] benzene;

(b)  1000 ppm zinc stearate; and

(c)  500 ppm tris nonylphenyl phosphite.

8.  A thermally stabilized polystyrene produced by the method of any one of claims 1 to 7.

**European Patent Office**

**EUROPEAN SEARCH REPORT**

**0064343**
Application number

EP 82 30 1953

## DOCUMENTS CONSIDERED TO BE RELEVANT

| Category | Citation of document with indication, where appropriate, of relevant passages | Relevant to claim | CLASSIFICATION OF THE APPLICATION (Int Cl. ³) |
|---|---|---|---|
| Y | MODERN PLASTIC ENCYCLOPEDIA, vol. 47, no. 10A, 1970-1971, pages 314 to 321, McGraw-Hill Inc., New York (USA); W.W.TOBIN: "Antioxidants". *The whole document* | 1-8 | C 08 F 12/08 C 08 F 2/44 |
| Y | SU-A- 184 870 (NAUCHNO-ISSLEDOVATELSKII INSTITUT REZINOVYKH I LATEKSNYKH IZDELII) *Object of the invention and english abstract* | 1-8 | |
| Y | FR-A-1 395 521 (FOSTER GRANT) *Abstract* | 1-8 | |
| Y | US-A-2 984 648 (V.W.FORREST et al.) *Claims* | 1-8 | TECHNICAL FIELDS SEARCHED (Int. Cl. ³) C 08 F C 08 K |

The present search report has been drawn up for all claims

| Place of search | Date of completion of the search | Examiner |
|---|---|---|
| THE HAGUE | 08-07-1982 | MERGONI M. |